(19) Europäisches Patentamt / European Patent Office / Office européen des brevets

(11) **EP 4 717 482 A1**

(12) **EUROPEAN PATENT APPLICATION**
published in accordance with Art. 153(4) EPC

(43) Date of publication:
**01.04.2026 Bulletin 2026/14**

(21) Application number: **24850707.1**

(22) Date of filing: **27.06.2024**

(51) International Patent Classification (IPC):
**B60H 1/00** (2006.01)

(52) Cooperative Patent Classification (CPC):
**B60H 1/00**

(86) International application number:
**PCT/CN2024/102091**

(87) International publication number:
**WO 2025/031056 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.08.2023 CN 202310986496**

(71) Applicant: **Great Wall Motor Company Limited**
**Baoding, Hebei 071000 (CN)**

(72) Inventor: **LUO, Zhi**
**Baoding, Hebei 071000 (CN)**

(74) Representative: **Klunker IP**
**Patentanwälte PartG mbB**
**Destouchesstraße 68**
**80796 München (DE)**

(54) **IN-VEHICLE ENVIRONMENT CONTROL METHOD AND APPARATUS, VEHICLE AND STORAGE MEDIUM**

(57) Embodiments of the present disclosure apply to the field of vehicle technologies, and provide an in-vehicle environment control method and a control device, a vehicle, and a computer-readable storage medium. The method includes: acquiring environmental information around a vehicle; inputting the environmental information into a preset first environmental prediction model, to obtain a first environmental parameter; inputting the first environmental parameter and the environmental information into a second environmental prediction model, to obtain a second environmental parameter, where the second environmental prediction model is obtained through training based on the output of the first environmental prediction model; and regulating, based on the second environmental parameter, environment inside the vehicle. The temperature inside the vehicle may be reasonably controlled based on the method, thus achieving a balance between comfort and energy conservation.

FIG. 1

**Description**

**CROSS-REFERENCE TO RELATED APPLICATIONS**

The present application claims priority to Chinese patent application No. 202310986496.3 filed on August 7, 2023, which is hereby incorporated by reference in its entirety.

**TECHNICAL FIELD**

The present application relates to the field of vehicle technologies, and in particular, to an in-vehicle environment control method and an in-vehicle environment control device, a vehicle, and a computer-readable storage medium.

**BACKGROUND**

The statement herein merely provides background information relevant to the present application and does not necessarily constitute prior art. To improve driver comfort, a vehicle is typically equipped with an on-board air-conditioning system to regulate a temperature inside the vehicle.

Currently, temperature control inside the vehicle is mainly carried out by the driver through manual or voice commands. However, such method is relatively less intelligent. Moreover, due to individual differences in temperature perception, the on-board air-conditioning system may consume excessive energy when trying to maintain the temperature set by the method mentioned above.

Accordingly, in the prior art, the temperature of the vehicle cannot be adaptively regulated in response to environment. Meanwhile, a temperature set by a user has a low accuracy.

**SUMMARY**

In view of above, embodiments of the present disclosure provide an in-vehicle environment control method and an in-vehicle environment control device, a vehicle, and a computer-readable storage medium, to solve a problem in the prior art that accuracy of regulation on the temperature is relatively low based on a temperature set by a user.

Technical solutions adopted in the present disclosure include the following.

In a first aspect, embodiments of the present disclosure provide an in-vehicle environment control method, including: acquiring environmental information around a vehicle; inputting the environmental information into a preset first environmental prediction model, to obtain a first environmental parameter; inputting the first environmental parameter and the environmental information into a second environmental prediction model, to obtain a second environmental parameter; and regulating, based on the second environmental parameter, environment inside the vehicle.

In a second aspect, the embodiments of the present disclosure provide the in-vehicle environment control device, including: an environmental information acquisition module, configured to acquire environmental information around a vehicle; a first environmental parameter acquisition module, configured to input the environmental information into a preset first environmental prediction model, to obtain a first environmental parameter; second environmental parameter acquisition module, configured to input the first environmental parameter and the environmental information into a second environmental prediction model, to obtain a second environmental parameter; and regulation module, configured to regulate, based on the second environmental parameter, environment inside the vehicle.

In a third aspect, the embodiments of the present disclosure provide the vehicle, including a memory, a processor, and a computer program stored in the memory and capable of being executed by the processor. When the computer program is executed, the processor is configured to implement: acquiring environmental information around a vehicle; inputting the environmental information into a preset first environmental prediction model, to obtain a first environmental parameter; inputting the first environmental parameter and the environmental information into a second environmental prediction model, to obtain a second environmental parameter; and regulating, based on the second environmental parameter, environment inside the vehicle.

In a fourth aspect, the embodiments of the present disclosure provide the computer-readable storage medium, storing a computer program. The computer program is executed by the processor to implement: acquiring environmental information around a vehicle; inputting the environmental information into a preset first environmental prediction model, to obtain a first environmental parameter; inputting the first environmental parameter and the environmental information into a second environmental prediction model, to obtain a second environmental parameter; and regulating, based on the second environmental parameter, environment inside the vehicle.

In a fifth aspect, the embodiments of the present disclosure provide a computer program product; when running on a vehicle, the computer program product enables the vehicle to implement: acquiring environmental information around a vehicle; inputting the environmental information into a preset first environmental prediction model, to obtain a first environmental parameter; inputting the first environmental parameter and the environmental information into a second environmental prediction model, to obtain a second environmental parameter, where the second environmental prediction model is obtained through training based on the output of the first environmental prediction model; and regulating, based on the second environmental parameter, environment inside the vehicle.

Compared with the prior art, the embodiments of the present disclosure have the following advantages.

Compared with the prior art, the embodiments of the present disclosure bring about the following beneficial effects. Based on actual environmental information of the vehicle, it is possible to reasonably predict a temperature for an air conditioner during operation, so that the on-board air conditioner can achieve a balance between comfort and energy efficiency when working in accordance with predicted environmental parameters. Moreover, in order to further improve the accuracy of the predicted environmental parameters, a first environmental prediction model may be used to perform preliminary prediction based on environmental information to obtain a first environmental parameter. Then, when a second environmental prediction model is used to simultaneously process environmental information and the first environmental parameter, the second environmental prediction model is configured to correct the predicted environmental parameter based on the first environmental parameter to obtain a second environmental parameter with higher accuracy to further improve prediction accuracy. Since the second environment prediction model is trained based on an output of the first environment prediction model, a training mode of the first environment prediction model and the second environment prediction model is an end-to-end training mode. Furthermore, advantages of both models can be effectively combined to improve predictive performance. Moreover, by training two different environmental prediction models, model errors may be effectively reduced. Thus, based on reasonable determination of the second environmental parameter that the temperature inside the vehicle needs to meet based on environmental information of the vehicle, a balance between comfort and energy efficiency may be further achieved.

## BRIEF DESCRIPTION OF THE DRAWINGS

To more clearly illustrate the technical solutions of the embodiments of the present disclosure or the prior art, a brief description of accompanying drawings that are required in the embodiments will hereinafter be provided. Obviously, the accompanying drawings described below are only some embodiments of the present disclosure. For those skilled in the art, they may obtain other drawings based on these accompanying drawings without creative labor.

FIG. 1 is a flowchart of an in-vehicle environment control method according to an embodiment of the present disclosure.
FIG. 2 is a flowchart of training a first environmental prediction model and a second environmental prediction model according to an embodiment of the present disclosure.
FIG. 3 is a flowchart of training a first environmental prediction model and a second environmental prediction model according to another embodiment of the present disclosure.
FIG. 4 is a schematic structural diagram of an in-vehicle environment control device according to an embodiment of the present disclosure.
FIG. 5 is a schematic structural diagram of a vehicle according to an embodiment of the present disclosure.

## DETAILED DESCRIPTION OF THE EMBODIMENTS

To make objectives, technical solutions and advantages of embodiments of the present disclosure more clearly, a clear and complete description of technical solutions of the embodiments of the present invention will be given below, in combination with accompanying drawings in the embodiments of the present invention. In the following description, specific details such as particular system architectures and technologies are set forth for purposes of explanation rather than limitation, so as to provide a thorough understanding of the embodiments of the present disclosure. However, it will be apparent to those skilled in the art that the present application may be implemented in other embodiments without these specific details. In other instances, detailed descriptions of well-known systems, devices, circuits, and methods are omitted so as not to obscure the description of the present disclosure with unnecessary detail.

An in-vehicle environment control method provided by the embodiments of the present disclosure may be applied to an in-vehicle device. For example, the in-vehicle environment control method may be implemented in an air-conditioning controller or a vehicle controller inside the vehicle. However, the embodiments of the present disclosure place no limitation on a specific type of the in-vehicle device.

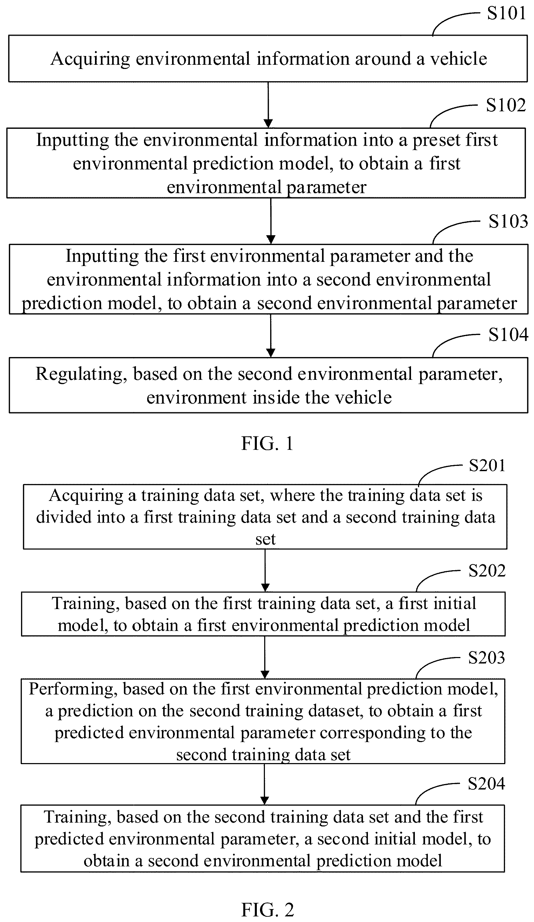

Referring to FIG. 1, FIG. 1 is a schematic flowchart of an in-vehicle environment control method according to an embodiment of the present disclosure. The method includes the following steps.

Step S101: acquiring environmental information around a vehicle.

In an embodiment, the above-mentioned environmental information is information that has an influence on temperature. Exemplarily, the environmental information may include, but is not limited to, weather, an ambient temperature, a vehicle color, a vehicle parking location, and month, which is not limited thereto in embodiments of the present disclosure.

The weather may include, but is not limited to, weather conditions such as sunny, rainy, or cloudy. It may be understood that different weather conditions exert a certain influence on the temperature.

The above-mentioned ambient temperature is usually a temperature outside the vehicle. Typically, when an air conditioner of the vehicle is not operating, a temperature inside the vehicle is the same as the temperature outside the vehicle.

Different colors absorb heat to varying degrees. Therefore, the above-mentioned vehicle color may further be regarded as the environmental information which need to be taken into consideration.

The vehicle parking location mainly indicates whether the vehicle is parked outdoors or indoors. It may be understood that, when the weather is sunny, if the vehicle parking location is outdoors, the temperature inside the vehicle will be relatively high; however, if the vehicle parking location is indoors, the temperature inside the vehicle is usually lower than when the vehicle is outdoors.

The month also has a certain effect on the temperature. It may be understood that, for sunny days, the temperature inside the vehicle may vary in different seasons with the same ambient temperature, the same vehicle color, and the same vehicle parking location.

In an embodiment, the weather and the ambient temperature may be obtained from a weather server through a networking function. The vehicle color may be set in advance by an owner in an on-board device. The vehicle parking location may be determined as indoors or outdoors by capturing an ambient image with a camera. The month may be determined from a preset time module in the on-board device.

It should be noted that various influencing factors may be taken into account comprehensively by selecting various environmental information to determine a final target temperature inside the vehicle. Consequently, when a model is subsequently used for prediction, accuracy and stability of the prediction may be improved.

It should be specifically noted that a trigger condition for implementing the in-vehicle environment control method of the present disclosure may include: while the vehicle is running, triggering the method when the temperature inside the vehicle is higher than a first preset temperature (i.e., the temperature inside the vehicle is too high), or when the temperature inside the vehicle is lower than a second preset temperature (i.e., the temperature inside the vehicle is too low). The method may further be triggered after receiving a control operation for the air conditioner of the vehicle from the owner of the vehicle. The method may also be triggered after receiving a remote-control command from a vehicle key, which will not be limited thereto.

The first preset temperature and the second preset temperature may be set according to actual circumstances, which will not be limited thereto.

In this embodiment, the trigger condition may include: triggering the method after receiving the remote-control command from the vehicle key. It may be understood that when the month is June, the weather is sunny, and the ambient temperature is 37°C, the temperature inside the vehicle will rise rapidly when the vehicle parking location is outdoors. At this point, when the owner returns to the vehicle, the stifling heat inside the vehicle is usually unbearable. Furthermore, when the month is December, the weather is rainy or snowy, and the ambient temperature is -5 °C, the temperature inside the vehicle will normally drop to about -5 °C when the vehicle parking location is outdoors. At this point, when the owner returns to the vehicle, the low temperature inside the vehicle is usually unbearable as well.

Accordingly, the in-vehicle environment control method may be executed when the on-board device receives the remote-control command from the vehicle key. Furthermore, the temperature inside the vehicle may be adjusted in advance before the owner arrives, thereby improving user experience of the owner.

Step S102: inputting the environmental information into a preset first environmental prediction model, to obtain a first environmental parameter.

In an embodiment, types of the environmental parameter include, but is not limited to, a temperature, humidity, and a wind speed. A device used to regulate the temperature inside the vehicle is usually an air conditioner. Accordingly, the environmental parameter may be regarded as an expected environmental parameter for the air conditioner when the air conditioner is regulated.

In an embodiment, the first environmental prediction model is obtained by training a model based on historical environmental information and an actual environmental parameter inside the vehicle corresponding to the historical environmental information. The actual environmental parameter refers to an actual working environmental parameter of the air conditioner after regulation by the owner under the historical environmental information.

Exemplarily, first historical environmental information may be input into the first environmental prediction model for model processing, to obtain a first predicted environmental parameter. Then, a training loss is calculated based on the first predicted environmental parameter and the actual environmental parameter, and the environmental parameter of the model are iteratively updated according to the training loss until the training loss converges, to obtain a trained first environmental prediction model.

Step S103: inputting the first environmental parameter and the environmental information into a second environmental prediction model, to obtain a second environmental parameter, where the second environmental prediction model is obtained by training based on an output of the first environmental prediction model.

In an embodiment, the second environmental parameter is similar to the first environmental parameter, and further description thereof is omitted here. Terms "first" and "second" within each expression are merely used for distinction and should not be interpreted as indicating or suggesting relative importance.

It should be noted that a training method of the second environmental prediction model differs slightly from that of the first environmental prediction model. Specifically, the second environmental prediction model is obtained through model training based on the historical environmental information, the actual environmental parameter inside the vehicle corresponding to the historical environmental information, and the first predicted environmental parameter corresponding to the historical environmental information (i.e., the output of the first environmental prediction model).

Exemplarily, the first historical environmental information and the first predicted environmental parameter may be input into the second environmental prediction model for model processing, to obtain a second predicted environmental parameter. Then, a training loss is calculated based on the second predicted environmental parameter and the actual environmental parameter, and the environmental parameter of the model is iteratively updated according to the training loss until the training loss converges, to obtain a trained second environmental prediction model.

At this point, during training of the second environmental prediction model, the second environmental prediction model may be trained based on the output of the first environmental prediction model (that is, a preliminary predicted first environmental parameter) to generate the second environmental parameter with higher accuracy, thereby improving the prediction accuracy.

Specifically, the first environmental prediction model and the second environmental prediction model may be trained according to steps S201 to S204 as shown in FIG. 2, the details are as follows.

Step S201: acquiring a training data set, where the training data set is divided into a first training data set and a second training data set.

In an embodiment, the training data set includes a plurality of sample data for training, which are divided into the first training data set used for training of the first environmental prediction model, and the second training data set used for the training of the second environmental prediction model. An amount of sample data in the first training data set may be the same as or different from an amount of sample data in the second training data set, which will not be limited thereto.

The sample data may be data collected during historical operation of the vehicle, or data obtained from a vehicle networking database, which will not be limited thereto.

In an embodiment, each sample data includes corresponding environmental information. It may be understood that, since there may be various environmental information, each sample data may include environmental information corresponding to various environmental indicators.

Specifically, the environmental information may include five types of data: weather, an ambient temperature, a vehicle color, vehicle parking location, and month. Each type of the environmental information corresponds to a specific environmental indicator, such as a weather indicator, a temperature indicator, a color indicator, a location indicator, and a month indicator. Therefore, when acquiring the training data set, each sample data should simultaneously include the environmental information corresponding to each of the above-mentioned five environmental indicators.

However, during an actual collection of the sample data, the environmental information corresponding to part of the environmental indicators in the sample data may be missing. At this point, if the sample data with missing environmental information is deleted, the amount of the sample data contained in the training data set may be few. If the model is trained based on a small amount of the sample data, the trained model may have problems of underfitting or overfitting, therefore reducing recognition accuracy of the model.

In view of above, to improve the recognition accuracy of the trained model, the missing environmental information is therefore filled. Then, the training data set may be generated based on the filled environmental information. That is, each of the sample data which have been filled will be used as the training data set.

Based on the explanation of the environmental information above, it may be known that the environmental information may be characterized in a numerical form or in a non-numerical (textual) form. For example, the month and the temperature may be characterized by numerical values. The weather, the vehicle color, and the vehicle parking location, are needed to be characterized by textual information. Therefore, for the environmental information corresponding to the different environmental indicators, a filling method may vary accordingly.

Specifically, when the environmental information corresponding to a first environmental indicator in the various environmental indicators is missing, missing environmental information corresponding to the first environmental indicator may be filled based on an average value of non-missing environmental information corresponding to the first environmental indicator. The first environmental indicator is an environmental indicator characterizing the environmental information through numerical values.

Based on the explanation of the environmental indicator above, the first environmental indicator mentioned above may include the temperature indicator and the month indicator.

In an embodiment, when the environmental information corresponding to the first environmental indicator is missing, since the environmental information is characterized by numerical values, the average value of the non-missing environmental information corresponding to the first environmental indicator may be used to fill in the missing environmental information corresponding to the first environmental indicator.

Exemplarily, for the temperature indicator, non-missing environmental information corresponding to the temperature indicator in other sample data may be acquired and used to calculate an average value of the non-missing environmental information.

Furthermore, in order to make the filled environmental information corresponding to the first environmental indicator as close as possible to an actual situation, environmental information corresponding to other first environmental indicators in this sample data, as well as the non-missing environmental information corresponding to the first environmental indicator in all sample data, may be used to comprehensively determine the environmental information to be filled for the first environmental indicator in this sample data.

Exemplarily, for any sample data, when there is missing environmental information in the sample data and the corresponding first environmental indicator is the temperature indicator, then the environmental information corresponding to other first environmental indicators (for example, the month indicator) in this sample data may be obtained. For example, in this sample data, environmental information corresponding to the month indicator is June. At this point, when determining the environmental information corresponding to the temperature indicator in this sample data, target sample data with the month indicator being June may be determined from all sample data first. Then, the missing environmental information in this sample data may be filled based on an average value of non-missing environmental information (temperature) corresponding to the temperature indicator in the target sample data.

Furthermore, when there is missing environmental information in the sample data and the corresponding first environmental indicator is the month indicator, environmental information corresponding to other first environmental indicators (temperature) in this sample data may be obtained. For example, the environmental information corresponding to the temperature indicator is 37 °C. At this point, when the environmental information corresponding to the month indicator in this sample data is determined, target sample data with the environmental information corresponding to the temperature indicator being 37 °C may be determined from all sample data first. Then, the missing environmental information in this sample data may be filled based on an average value of non-missing environmental information (month) corresponding to the month indicator in the target sample data.

It may be understood that the filled environmental information may be closer to the actual situation by using the above-mentioned method to fill in the missing environmental information, thereby improving the accuracy of the sample data.

When the environmental information corresponding to multiple first environmental indicators (for example, the temperature indicator and the month indicator) is simultaneously missing, an average value of non-missing environmental information in all sample data may be directly used for filling, and further description thereof is omitted here.

In another embodiment, when environmental information corresponding to a second environmental indicator in the various environmental indicators is missing, missing environmental information corresponding to the second environmental indicator may be filled based on preset information. The second environmental indicator is an environmental indicator characterizing the environmental information through non-numerical values. Exemplarily, the second environmental indicator may be the color indicator, the weather indicator, or the location indicator.

In an embodiment, the preset information corresponding to different second environmental indicators is usually different, which will not be limited thereto. Exemplarily, for the color indicator, the corresponding environmental information may be black. And for the weather indicator, the corresponding environmental information may be sunny.

In another embodiment, the environmental information to be filled may further be determined based on non-missing environmental information corresponding to the second environmental indicator in all sample data. Specifically, for any missing environmental information corresponding to the second environmental indicator, an occurrence count of each environmental information may be calculated by analyzing the non-missing environmental information corresponding to the second environmental indicator in all sample data. Target environmental information corresponding to a minimum occurrence count is then used to fill the non-missing environmental information corresponding to the second environmental indicator in this sample data.

Exemplarily, when the missing second environmental indicator in this sample data is environmental information corresponding to the color indicator, a target vehicle color with the minimum occurrence count may be determined from the environmental information (vehicle color) corresponding to the second environmental indicator (color indicator) in all sample data. The target vehicle color may then be used to fill in the environmental information corresponding to the color indicator in this sample data.

It should be noted that a purpose of filling in the target environmental information corresponding to the minimum occurrence count is to balance an occurrence amount of each type of environmental information in the training data set as much as possible, so that a training data set with relatively balanced environmental information may be generated to avoid problems of underfitting or overfitting of the first environmental prediction model and the second environmental prediction model after training.

The above description is an example for filling in the environmental information corresponding to different types of environmental indicators. By using the above filling method, it is possible to reasonably determine the environmental information to be filled corresponding to different types of environmental indicators, ensuring that each sample data is closer to actual sample data.

Step S202: training, based on the first training data set, a first initial model to obtain the first environmental prediction model.

Step S203: performing, based on the first environmental prediction model, a prediction on the second training data set to obtain a first predicted environmental parameter corresponding to the second training data set.

Step S204: training, based on the second training data set and the first predicted environmental parameter, a second initial model to obtain the second environmental prediction model.

In an embodiment, the method for training the first environmental prediction model and the second environmental prediction model has been explained above, and further description thereof is omitted here. The first initial model and the second initial model are untrained neural network models.

After performing the prediction on each sample data in the second training data set based on the first environmental prediction model, the first predicted environmental parameter corresponding to each sample data in the second training data set may be obtained. Subsequently, the sample data and the first predicted environmental parameter corresponding to the sample data are combined to form a new group of sample data. At this point, the step of training, based on the second training data set and the first predicted environmental parameter, the second initial model to obtain the second environmental prediction model may include: inputting each new group of sample data into the second initial model for model training respectively.

It should be noted that during the process of training the second environmental prediction model, the purpose of further combining the first predicted environmental parameter predicted by the first environmental prediction model lies in that, as the first environmental prediction model is capable of capturing a linear relationship between the data and the second environmental prediction model is capable of capturing a non-linear relationship between the data, the second predicted environmental parameter preliminarily predicted based on these linear and non-linear relationships may be more accurate. At this point, during a training process for a gradient boosting regression model, prediction results of the gradient boosting regression model may be corrected based on both the linear and non-linear relationships between data to obtain a more accurate second predicted environmental parameter.

Exemplarily, the first environmental prediction model may be a ridge regression model to obtain the linear relationship between the data, and the second environmental prediction model may be the gradient boosting regression model to obtain the non-linear relationship between the data.

In a specific embodiment, the ridge regression model may be established based on a Ridge class in a scikit-learn library. For example, a Ridge object is instantiated as the first initial model, and then the first training data set is used to perform training to obtain the ridge regression model. Furthermore, the gradient boosting regression model is established based on a GradientBoostingRegressor class in the scikit-learn library. For example, a GradientBoostingRegressor object is instantiated as the second initial model, and then the second training data set and the first predicted environmental parameter are used to perform training to obtain the gradient boosting regression model.

It should be added that if the ridge regression model is directly used for prediction, the predicted environmental parameter may be of low accuracy, that is, the predicted environmental parameter could deviate noticeably from an expected environmental parameter. Furthermore, if the gradient boosting regression model is directly used for prediction, the predicted environmental parameter are likely to fall into two extreme categories. For example, the predicted environmental parameter maybe close to the expected environmental parameter, or the predicted environmental parameter may differ significantly from the expected environmental parameter.

Based on this, in this embodiment, during the training process, the ridge regression model is first trained, and then a preliminary prediction is performed on the second training data set based on the trained ridge regression model to obtain the first predicted environmental parameter relatively close to the expected environmental parameter. Subsequently, in the process of performing the prediction on the second training data set based on the gradient boosting regression model, the influence of the first predicted environmental parameter may be taken into account, to output the second predicted environmental parameter with higher accuracy to participate in the model training. For example, when the environmental parameter predicted by the gradient boosting regression model differs significantly from the first predicted environmental parameter, then it may be known that the predicted environmental parameter for this instance are inaccurate. At this point, the gradient boosting regression model may be adjusted based on the first predicted environmental parameter to generate the second predicted environmental parameter with higher accuracy.

The above description is the training process of the first environmental prediction model and the second environmental prediction model. Based on the above description, it may be known that the step S102 should be executed first to input the environmental information into the preset first environmental prediction model, to obtain the first environmental parameter with higher accuracy. Then, when step S103 is executed to simultaneously input the first environmental parameter and the environmental information into the second environmental prediction model, the second environmental prediction model may make corrections based on the more accurate first environmental parameter, to obtain a more accurate second environmental parameter.

Step S104: regulating, based on the second environmental parameter, environment inside the vehicle.

In an embodiment, the types of the environmental parameter described above includes, but is not limited to, a temperature, humidity, a wind speed, and other types of environmental parameters. Based on this, the step of regulating, based on the second environmental parameter, the temperature inside the vehicle may include: adjusting a working environment parameter of the air conditioner of the vehicle to the second environmental parameter to indirectly control the temperature inside the vehicle.

Exemplarily, when the second environmental parameter includes a temperature of 26°C, a relative humidity of 50%, and a wind speed of 0.15m/s, then the working environment parameter of the air conditioner may be adjusted to the temperature of 26°C, the relative humidity of 50%, and the wind speed of 0.15m/s.

It should be added that when the temperature inside the vehicle is regulated, it is necessary to first check whether the windows are closed. When the windows are not closed, then the window may be controlled to be closed first.

In this embodiment, based on actual environmental information of the vehicle, it is possible to reasonably predict a temperature for an on-board air conditioner during operation, so that the on-board air conditioner can achieve a balance between comfort and energy efficiency when working in accordance with predicted environmental parameters. Moreover, in order to further improve the accuracy of the predicted environmental parameters, a first environmental prediction model may be used to perform preliminary prediction based on environmental information to obtain a first environmental parameter. Then, when a second environmental prediction model is used to simultaneously process environmental information and the first environmental parameter, the second environmental prediction model is configured to correct the predicted environmental parameter based on the first environmental parameter to obtain a second environmental parameter with higher accuracy to further improve prediction accuracy. Since the second environment prediction model is trained based on an output of the first environment prediction model, a training mode of the first environment prediction model and the second environment prediction model is an end-to-end training mode. Furthermore, advantages of both models can be effectively combined to improve predictive performance. Moreover, by training two different environmental prediction models, model errors may be effectively reduced. Thus, based on reasonable determination of the second environmental parameter that the temperature inside the vehicle needs to meet based on environmental information of the vehicle, a balance between comfort and energy efficiency may be further achieved.

In another embodiment, during a training process of a first environmental prediction model and a second environmental prediction model, since each sample data in the training data set acquired is raw data and may not be directly recognized by a first initial model and a second initial model, all sample data need to be preprocessed appropriately in advance.

Specifically, since a second environmental indicator is an environmental indicator characterized by a non-numerical value to represent environmental information and may not be directly recognized by the neural network model, for environmental information corresponding to any type of the second environmental indicator, the environmental information may be encoded to obtain a numerical feature corresponding to the environmental information.

Exemplarily, One-Hot Encoding, Map Encoding, or Label Encoding may be adopted to convert the environmental information into numerical features that are acceptable to a machine learning model.

Since the first environmental indicator has been characterized by numerical values, in this step, there is no need to perform encoding processing on the first environmental indicator, to reduce an amount of data to be processed.

Furthermore, in the sample data, the environmental information corresponding to each environmental indicator usually has differences in units, making it hard to quantitatively measure the influence of each environmental information during the model training process reasonably. Based on this, to enable a quantitative assessment of influence of each environmental information, the environmental information of different environmental indicators should be subjected to same scaling rules. Specifically, the environmental information corresponding to different environmental indicators need to be standardized.

Specifically, for all environmental information corresponding to each environmental indicator, an average value and a standard deviation of all environmental information are calculated. Then, based on the average value and the standard deviation, normalization processing is performed on each environmental information, respectively, to obtain a training data set characterized by the normalized environmental information.

For example, a product of the average value and the standard deviation may be calculated first, then, a difference between each environmental information and the product is calculated as the normalized environmental information.

Exemplarily, for all the environmental information corresponding to the temperature indicator, the average value and standard deviation corresponding to all ambient temperatures may be calculated first, and then a product of the average value and the standard deviation is calculated. Subsequently, for each ambient temperature, a difference between the temperature and the product is calculated, and the difference is the normalized environmental information corresponding to this ambient temperature.

Specifically, the normalization formula may be:

$$x'_{in} = x_{in} - \mu_i \sigma_i$$

Therein, $x'_{in}$ refers to the normalized environmental information corresponding to the i-th environmental indicator in the nth sample data; $x_{in}$ refers to the environmental information corresponding to the i-th environmental indicator in the nth sample data; $\mu_i$ refers to the average value of all environmental information corresponding to the i-th environmental indicator; $\sigma_i$ refers to the standard deviation of all environmental information corresponding to the i-th environmental indicator.

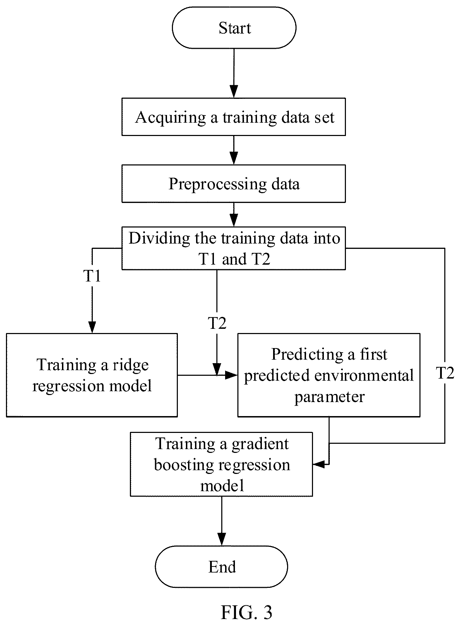

In another embodiment, referring to FIG. 3, FIG. 3 is a flowchart of a training method for a first environmental prediction model and a second environmental prediction model according to another embodiment of the present disclosure. Firstly, a plurality of sample data may be acquired from a vehicle network database to form a training data set, and each sample data is preprocessed. For example, the preprocessing process may include: filling in the data for each sample data, encoding environmental information characterized by non-numerical values, and normalizing the environmental information in all sample data. Then, the training data set is divided into a first training data set T1 and a second training data set T2. For example, the training data set may be divided into T1 and T2 on average. Subsequently, a ridge regression model is trained based on the first training data set T1. After the training process, the model is used to predict T2 to obtain a first predicted environmental parameter. Finally, a gradient boosting regression model is trained based on T2 and the first predicted environmental parameter.

It should be added that the training method for the first environmental prediction model and the second environmental prediction model may further be applied to model training in other scenarios. Exemplarily, the training method may further be applied to scenarios such as vehicle energy consumption prediction and traffic flow prediction for training models. At this point, during a training process of a model for predicting vehicle energy consumption or traffic flow, it is also possible to train both models simultaneously. Furthermore, during the training process, a pre-trained model may be used to perform predictions on the training data set to obtain prediction results. Then, the prediction results and the training data set are used to train another model. At this point, the two trained models may be applied to the prediction in this scenario. It may be understood that for different prediction scenarios, the training data set collected is usually different, but the training method may be referred to steps S201-S204 mentioned above, and further description thereof is omitted here.

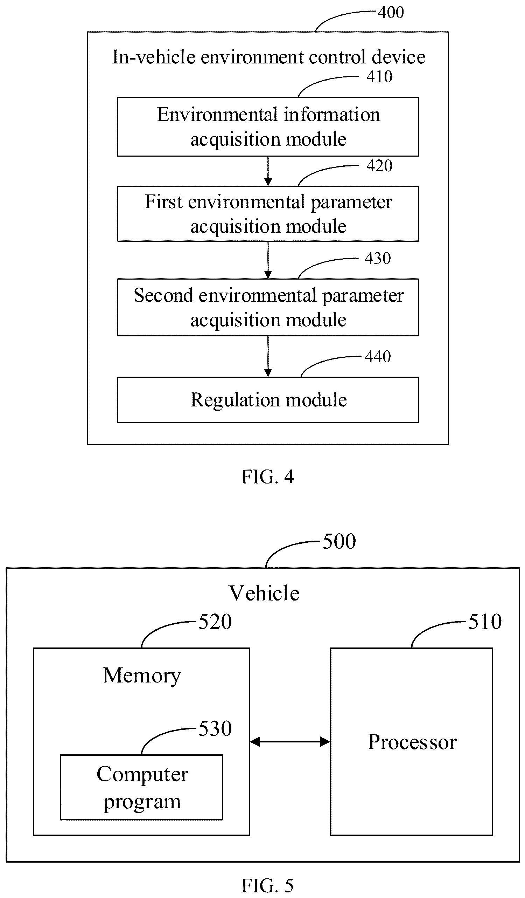

Referring to FIG. 4, FIG. 4 is a schematic structural diagram of an in-vehicle environment control device according to an embodiment of the present disclosure. In this embodiment, modules included in the in-vehicle environment control device are configured to execute steps corresponding to the embodiments of FIGS. 1 to 3. Specific explanation may be referred to FIGS. 1 to 3 and detailed information in embodiments corresponding to FIGS. 1 to 3. For clarity, only a part directly related to this embodiment will be illustrated in the following. Referring to FIG. 4, the in-vehicle environment control device 400 may include: an environmental information acquisition module 410, a first environmental parameter acquisition module 420, a second environmental parameter acquisition module 430, and a regulation module 440.

The environmental information acquisition module 410 is configured to acquire environmental information around a vehicle.

The first environmental parameter acquisition module 420 is configured to input the environmental information into a preset first environmental prediction model, to obtain a first environmental parameter.

The second environmental parameter acquisition module 430 is configured to input the first environmental parameter and the environmental information into a second environmental prediction model, to obtain a second environmental parameter; where the second environmental prediction model is obtained through training based on an output of the first environmental prediction model.

The regulation module 440 is configured to regulate, based on the second environmental parameter, environment inside the vehicle.

In an embodiment, an environmental prediction model is obtained by training based on the output of the first environmental prediction model. The in-vehicle environment control device 400 may further includes the following modules to train the second environmental prediction model.

A training data set acquisition module, configured to acquire a training data set, where the training data set is divided into a first training data set and a second training data set.

A first environmental prediction model training module, configured to train, based on the first training data set, a first initial model, to obtain the first environmental prediction model.

A first predicted environmental parameter acquisition module, configured to perform, based on the first environmental prediction model, a prediction on the second training data set, to obtain a first predicted environmental parameter corresponding to the second training data set.

A second environmental prediction model acquisition module, configured to train, based on the second training data set and the first predicted environmental parameter, a second initial model, to obtain the second environmental prediction model.

In an embodiment, the training data set includes a plurality of sample data, each of the plurality of sample data includes environmental information corresponding to a plurality of environmental indicators respectively.

The training data set acquisition module is further configured to fill, based on an average value of non-missing environmental information corresponding to a first environmental indicator, missing environmental information corresponding to the first environmental indicator, when the environmental information corresponding to the first environmental indicator in the plurality of environmental indicators is missing, where the first environmental indicator is an environmental indicator characterizing the environmental information through a numerical value; fill, based on preset information, missing environmental information corresponding to a second environmental indicator, when the environmental information corresponding to the second environmental indicator in the plurality of environmental indicators is missing, where the second environmental indicator is an environmental indicator characterizing the environmental information through a non-numerical value; and generate, based on filled environmental information, the training data set.

In an embodiment, the training data set acquisition module is further configured to:
encode the environmental information corresponding to a second environmental indicator, to obtain a numerical feature corresponding to the environmental information, where the second environmental indicator is an environmental indicator characterizing the environmental information through non-numerical values; and perform, based on environmental information corresponding to each of environmental indicators, normalization processing on the environmental information, to obtain the training data set characterized by normalized environmental information.

In an embodiment, the training data set acquisition module is further configured to:
calculate an average value and a standard deviation of the environmental information corresponding to each of the environmental indicators; and perform, based on the average value and the standard deviation, normalization processing on the environmental information respectively, to obtain the training data set characterized by the normalized environmental information.

In an embodiment, the training data set acquisition module is further configured to:
calculate a product of the average value and the standard deviation; and determine a difference between the environmental information and the product as the normalized environmental information.

In an embodiment, the first environmental prediction model is a ridge regression model, and the second environmental prediction model is a gradient boosting regression model.

For the device embodiment, since it is basically similar to the method embodiment, the description is relatively brief. The relevant points may be found in the description of the method embodiment section.

FIG. 5 is a schematic structural diagram of a vehicle according to an embodiment of the present disclosure. As shown in FIG. 5, the vehicle 500 of this embodiment includes: a processor 510, a memory 520, and a computer program 530 stored in memory 520 and capable of being executed by the processor 510, such as the program of the in-vehicle environment control method. When the computer program 530 is executed, the processor 510 is configured to implement steps of the above-mentioned in-vehicle environment control method in each of the embodiments, such as steps S101 to S104 shown in FIG. 1. Alternatively, when the computer program 530 is executed, the processor 510 is configured to implement functions of each module as described in the corresponding embodiment of FIG. 4. The details are as follows.

A vehicle, including a memory, a processor, and a computer program stored in the memory and capable of being executed by the processor, where when the computer program is executed, the processor is configured to implement the following steps: acquiring environmental information around a vehicle; inputting the environmental information into a preset first environmental prediction model, to obtain a first environmental parameter; inputting the first environmental parameter and the environmental information into a second environmental prediction model, to obtain a second environmental parameter; and regulating, based on the second environmental parameter, environment inside the vehicle.

In an embodiment, the second environmental prediction model is obtained through training based on the output of the first environmental prediction model. When the computer program is executed, the processor is further configured to implement training of the second environmental prediction model. The training steps include: acquiring a training data set, where the training data set is divided into a first training data set and a second training data set; training, based on the first training data set, a first initial model, to obtain the first environmental prediction model; performing, based on the first environmental prediction model, a prediction on the second training data set, to obtain a first predicted environmental parameter corresponding to the second training data set; and training, based on the second training data set and the first predicted environmental parameter, a second initial model, to obtain the second environmental prediction model.

In an embodiment, the training data set includes a plurality of sample data, each of the plurality of sample data includes the environmental information corresponding to a plurality of environmental indicators. When the computer program is executed, the processor is further configured to implement: filling, based on an average value of non-missing environmental information corresponding to a first environmental indicator, missing environmental information corresponding to the first environmental indicator, when the environmental information corresponding to the first environmental indicator in the plurality of environmental indicators is missing, where the first environmental indicator is an environmental indicator characterizing the environmental information through a numerical value; filling, based on preset information, missing environmental information corresponding to a second environmental indicator, when the environmental information corresponding to the second environmental indicator in the plurality of environmental indicators is missing, where the second environmental indicator is an environmental indicator characterizing the environmental information through a non-numerical value; and generating, based on filled environmental information, the training data set.

In an embodiment, when the computer program is executed, the processor is further configured to implement: encoding the environmental information corresponding to a second environmental indicator, to obtain a numerical feature corresponding to the environmental information, where the second environmental indicator is an environmental indicator characterizing the environmental information through non-numerical values; and performing, based on environmental information corresponding to each of environmental indicators, normalization processing on the environmental information, to obtain the training data set characterized by normalized environmental information.

In an embodiment, when the computer program is executed, the processor is further configured to implement: calculating an average value and a standard deviation of the environmental information corresponding to each of the environmental indicators; and performing, based on the average value and the standard deviation, normalization processing on the environmental information respectively, to obtain the training data set characterized by the normalized environmental information

In an embodiment, when the computer program is executed, the processor is further configured to implement: calculating a product of the average value and the standard deviation; and determining a difference between the environmental information and the product as the normalized environmental information

In an embodiment, the first environmental prediction model is a linear prediction model, and the second environmental prediction model is a non-linear prediction model.

The computer program 530 may be divided into one or more modules. The one or more modules are stored in the memory 520 and are executed by the processor 510 to implement the in-vehicle environment control method provided by the embodiments of the present disclosure. The one or more modules may be a series of computer program instructions that may perform a specific function. These instructions are used to describe execution processes of computer program 530 within the vehicle 500. For example, the computer program 530 may be used to implement the control method for the in-vehicle environment as provided by the embodiments of the present disclosure. The details are as follows.

The embodiments of the present disclosure provide a computer-readable storage medium storing a computer program, the computer program, when executed by the processor, implements: acquiring environmental information around a vehicle; inputting the environmental information into a preset first environmental prediction model, to obtain a first environmental parameter; inputting the first environmental parameter and the environmental information into a second environmental prediction model, to obtain a second environmental parameter; and regulating, based on the second environmental parameter, environment inside the vehicle.

In an embodiment, the second environmental prediction model is obtained through training based on the output of the first environmental prediction model. When executed by the processor, the computer program is further configured to implement training of the second environmental prediction model. The training steps include: acquiring a training data set, where the training data set is divided into a first training data set and a second training data set; training, based on the first training data set, a first initial model, to obtain the first environmental prediction model; performing, based on the first environmental prediction model, a prediction on the second training data set, to obtain a first predicted environmental parameter corresponding to the second training data set; and training, based on the second training data set and the first predicted environmental parameter, a second initial model, to obtain the second environmental prediction model.

In an embodiment, the training data set includes a plurality of sample data, each of the plurality of sample data includes the environmental information corresponding to various environmental indicators, respectively. When executed by the processor, the computer program is further configured to implement: filling, based on an average value of non-missing environmental information corresponding to a first environmental indicator, missing environmental information corresponding to the first environmental indicator, when the environmental information corresponding to the first environmental indicator in the plurality of environmental indicators is missing, where the first environmental indicator is an environmental indicator characterizing the environmental information through a numerical value; filling, based on preset information, missing environmental information corresponding to a second environmental indicator, when the environmental information corresponding to the second environmental indicator in the plurality of environmental indicators is missing, where the second environmental indicator is an environmental indicator characterizing the environmental information through a non-numerical value; and generating, based on filled environmental information, the training data set.

In an embodiment, when executed by the processor, the computer program is further configured to implement: encoding the environmental information corresponding to a second environmental indicator, to obtain a numerical feature corresponding to the environmental information, where the second environmental indicator is an environmental indicator characterizing the environmental information through non-numerical values; and performing, based on environmental information corresponding to each of environmental indicators, normalization processing on the environmental information, to obtain the training data set characterized by normalized environmental information.

In an embodiment, when executed by the processor, the computer program is further configured to implement: calculating an average value and a standard deviation of the environmental information corresponding to each of the environmental indicators; and performing, based on the average value and the standard deviation, normalization processing on the environmental information respectively, to obtain the training data set characterized by the normalized environmental information.

In an embodiment, when executed by the processor, the computer program is further configured to implement: calculating a product of the average value and the standard deviation; and determining a difference between the environmental information and the product as the normalized environmental information.

In an embodiment, the first environmental prediction model is a linear prediction model, and the second environmental prediction model is a non-linear prediction model.

The vehicle 500 may include, but is not limited to, a processor 510 and a memory 520. As understood by those skilled in the art, FIG. 5 is merely an example of vehicle 500 and does not constitute a limitation on vehicle 500. The vehicle 500 may include more or fewer components than those shown, or combine certain components, or have different components. For example, the vehicle may also include input/output devices, network access devices, buses, etc.

The processor 510 mentioned above may be a Central Processing Unit (CPU), or another general processor, a Digital Signal Processing (DSP), an Application-Specific Integrated Circuit (ASIC), a Field Programmable Gate Array (FPGA), or any other programmable logic device, discrete gates or transistor logic devices, discrete hardware components, etc. The general processor may be a microprocessor or any conventional processor, etc.

The memory 520 may be an internal storage unit of the vehicle 500, such as a hard drive or a memory of the vehicle 500. The memory520 may also be an external storage device of the vehicle 500, such as the plug-in hard drive, smart memory card, flash memory card, etc., equipped on the vehicle 500. Furthermore, the memory 520 may include both the internal storage unit and the external storage devices of the vehicle 500.

The embodiments of the present disclosure provide a computer program product. When the computer program product operates on a vehicle, the computer program product enables the vehicle to implement: acquiring environmental information around a vehicle; inputting the environmental information into a preset first environmental prediction model, to obtain a first environmental parameter; inputting the first environmental parameter and the environmental information into a second environmental prediction model, to obtain a second environmental parameter; and regulating, based on the second environmental parameter, environment inside the vehicle.

In an embodiment, the second environmental prediction model is obtained through training based on the output of the first environmental prediction model. When the computer program product operates on a vehicle, the computer program product enables the vehicle to further execute the training of the second environmental prediction model. The training steps include: acquiring a training data set, where the training data set is divided into a first training data set and a second training data set; training, based on the first training data set, a first initial model, to obtain the first environmental prediction model; performing, based on the first environmental prediction model, a prediction on the second training data set, to obtain a first predicted environmental parameter corresponding to the second training data set; and training, based on the second training data set and the first predicted environmental parameter, a second initial model, to obtain the second environmental prediction model.

In an embodiment, the training data set includes a plurality of sample data, each of the plurality of sample data includes the environmental information corresponding to various environmental indicators, respectively. When the computer program product operates on a vehicle, the computer program product enables the vehicle to execute: filling, based on an average value of non-missing environmental information corresponding to a first environmental indicator, missing environmental information corresponding to the first environmental indicator, when the environmental information corresponding to the first environmental indicator in the plurality of environmental indicators is missing, where the first environmental indicator is an environmental indicator characterizing the environmental information through a numerical value; filling, based on preset information, missing environmental information corresponding to a second environmental indicator, when the environmental information corresponding to the second environmental indicator in the plurality of environmental indicators is missing, where the second environmental indicator is an environmental indicator characterizing the environmental information through a non-numerical value; and generating, based on filled environmental information, the training data set.

In an embodiment, when the computer program product operates on a vehicle, the computer program product enables the vehicle to further execute: encoding the environmental information corresponding to a second environmental indicator, to obtain a numerical feature corresponding to the environmental information, where the second environmental indicator is an environmental indicator characterizing the environmental information through non-numerical values; and performing, based on environmental information corresponding to each of environmental indicators, normalization processing on the environmental information, to obtain the training data set characterized by normalized environmental information.

In an embodiment, when the computer program product operates on a vehicle, the computer program product enables the vehicle to further execute: calculating an average value and a standard deviation of the environmental information corresponding to each of the environmental indicators; and performing, based on the average value and the standard deviation, normalization processing on the environmental information respectively, to obtain the training data set characterized by the normalized environmental information.

In an embodiment, when the computer program product operates on a vehicle, the computer program product enables the vehicle to further execute: calculating a product of the average value and the standard deviation; and determining a difference between the environmental information and the product as the normalized environmental information.

In an embodiment, the first environmental prediction model is a linear prediction model, and the second environmental prediction model is a non-linear prediction model.

The above-mentioned embodiments are merely used to illustrate the technical solution of the present application, and are not intended to limit it. Although the present disclosure has been described in detail with reference to the above-mentioned embodiments, those skilled in the art should understand that: they may still modify the technical solutions recorded in the above-mentioned embodiments, or make equivalent substitutions for some of the technical features thereof; and these modifications or substitutions do not cause the essence of the corresponding technical solutions to deviate from the spirit and scope of the technical solutions of each embodiment of the present disclosure, and the spirit and scope shall fall within the protection scope of the present invention.

**Claims**

1. An in-vehicle environment control method, comprising:

   acquiring environmental information around a vehicle;
   inputting the environmental information into a preset first environmental prediction model, to obtain a first environmental parameter;
   inputting the first environmental parameter and the environmental information into a second environmental prediction model, to obtain a second environmental parameter; and
   regulating, based on the second environmental parameter, environment inside the vehicle.

2. The method according to claim 1, wherein the second environmental prediction model is obtained through training based on an output of the first environmental prediction model; and training steps of the second environmental prediction model comprise:

   acquiring a training data set, wherein the training data set is divided into a first training data set and a second training data set;
   training, based on the first training data set, a first initial model to obtain the first environmental prediction model;
   performing, based on the first environmental prediction model, a prediction on the second training data set to obtain a first predicted environmental parameter corresponding to the second training data set; and
   training, based on the second training data set and the first predicted environmental parameter, a second initial model to obtain the second environmental prediction model.

3. The method according to claim 2, wherein the training data set comprises a plurality of sample data, each of the plurality of sample data comprises the environmental information corresponding to a plurality of environmental indicators; and the acquiring the training data set, comprises:

   filling, based on an average value of non-missing environmental information corresponding to a first environmental indicator, missing environmental information corresponding to the first environmental indicator, when the environmental information corresponding to the first environmental indicator in the plurality of environmental indicators is missing, wherein the first environmental indicator is an environmental indicator characterizing the environmental information through a numerical value;
   filling, based on preset information, missing environmental information corresponding to a second environmental indicator, when the environmental information corresponding to the second environmental indicator in the plurality of environmental indicators is missing, wherein the second environmental indicator is an environmental indicator characterizing the environmental information through a non-numerical value; and
   generating, based on filled environmental information, the training data set.

4. The method according to claim 2 or claim 3, wherein the acquiring the training data set, further comprises:

encoding the environmental information corresponding to the second environmental indicator, to obtain a numerical feature corresponding to the environmental information, wherein the second environmental indicator is an environmental indicator characterizing the environmental information through non-numerical values; and performing, based on environmental information corresponding to each of environmental indicators, normalization processing on the environmental information, to obtain the training data set **characterized by** normalized environmental information.

5. The method according to claim 4, wherein the performing, based on environmental information corresponding to each of environmental indicators, normalization processing on the environmental information, to obtain the training data set **characterized by** normalized environmental information, comprises:

calculating an average value and a standard deviation of the environmental information corresponding to each of the environmental indicators; and performing, based on the average value and the standard deviation, normalization processing on the environmental information respectively, to obtain the training data set **characterized by** the normalized environmental information.

6. The method according to claim 5, wherein the performing, based on the average value and the standard deviation, normalization processing on the environmental information respectively comprises:

calculating a product of the average value and the standard deviation; and determining a difference between the environmental information and the product as the normalized environmental information.

7. The method according to any one of claims 1 to 3 or claim 5 or claim 6, wherein the first environmental prediction model is a linear prediction model, and the second environmental prediction model is a non-linear prediction model.

8. A in-vehicle environment control device, comprising:

an environmental information acquisition module, configured to acquire environmental information around a vehicle; a first environmental parameter acquisition module, configured to input the environmental information into a preset first environmental prediction model, to obtain a first environmental parameter; a second environmental parameter acquisition module, configured to input the first environmental parameter and the environmental information into a second environmental prediction model, to obtain a second environmental parameter; and a regulation module, configured to regulate, based on the second environmental parameter, environment inside the vehicle.

9. A vehicle, comprising a memory, a processor, and a computer program stored in the memory and capable of being executed by the processor, wherein when the computer program is executed, the processor is configured to implement the following steps:

acquiring environmental information around a vehicle; inputting the environmental information into a preset first environmental prediction model, to obtain a first environmental parameter; inputting the first environmental parameter and the environmental information into a second environmental prediction model, to obtain a second environmental parameter, wherein the second environmental prediction model is obtained through training based on the output of the first environmental prediction model; and regulating, based on the second environmental parameter, environment inside the vehicle.

10. A computer-readable storage medium, storing a computer program, wherein the computer program, when executed by the processor, is configured to implement the following steps:

acquiring environmental information around a vehicle; inputting the environmental information into a preset first environmental prediction model, to obtain a first environmental parameter; inputting the first environmental parameter and the environmental information into a second environmental prediction model, to obtain a second environmental parameter, wherein the second environmental prediction model is obtained through training based on the output of the first environmental prediction model; and regulating, based on the second environmental parameter, environment inside the vehicle.

S101

Acquiring environmental information around a vehicle

S102

Inputting the environmental information into a preset first environmental prediction model, to obtain a first environmental parameter

S103

Inputting the first environmental parameter and the environmental information into a second environmental prediction model, to obtain a second environmental parameter

S104

Regulating, based on the second environmental parameter, environment inside the vehicle

FIG. 1

S201

Acquiring a training data set, where the training data set is divided into a first training data set and a second training data set

S202

Training, based on the first training data set, a first initial model, to obtain a first environmental prediction model

S203

Performing, based on the first environmental prediction model, a prediction on the second training dataset, to obtain a first predicted environmental parameter corresponding to the second training data set

S204

Training, based on the second training data set and the first predicted environmental parameter, a second initial model, to obtain a second environmental prediction model

FIG. 2

```
                    ┌─────────────┐
                    │    Start     │
                    └──────┬──────┘
                           │
                           ▼
              ┌────────────────────────────┐
              │  Acquiring a training data set  │
              └────────────┬───────────────┘
                           │
                           ▼
              ┌────────────────────────────┐
              │      Preprocessing data      │
              └────────────┬───────────────┘
                           │
                           ▼
              ┌────────────────────────────┐
              │  Dividing the training data into │
              │          T1 and T2           │
              └────────────────────────────┘
```

Start

Acquiring a training data set

Preprocessing data

Dividing the training data into T1 and T2

T1

T2

Training a ridge regression model

Predicting a first predicted environmental parameter

T2

Training a gradient boosting regression model

End

FIG. 3

400

In-vehicle environment control device

410

Environmental information
acquisition module

420

First environmental parameter
acquisition module

430

Second environmental parameter
acquisition module

440

Regulation module

FIG. 4

500

Vehicle

520

Memory

510

530

Computer
program

Processor

FIG. 5

## INTERNATIONAL SEARCH REPORT

| International application No. |
| --- |
| **PCT/CN2024/102091** |

### A. CLASSIFICATION OF SUBJECT MATTER

B60H1/00(2006.01)i

According to International Patent Classification (IPC) or to both national classification and IPC

### B. FIELDS SEARCHED

Minimum documentation searched (classification system followed by classification symbols)

IPC: B60H

Documentation searched other than minimum documentation to the extent that such documents are included in the fields searched

Electronic data base consulted during the international search (name of data base and, where practicable, search terms used)

CNTXT, ENTCT, WPABS, CNKI, VEN: 车, 环境, 预测, 模型, 参数, 调整, 训练, vehicle, environment, predict+, model, adjust +, parameter

### C. DOCUMENTS CONSIDERED TO BE RELEVANT

| Category* | Citation of document, with indication, where appropriate, of the relevant passages | Relevant to claim No. |
| --- | --- | --- |
| PX | CN 116811528 A (GREAT WALL MOTOR CO., LTD.) 29 September 2023 (2023-09-29) claims 1-10 | 1-10 |
| Y | CN 106347374 A (SHENZHEN LAUNCH TECHNOLOGY CO., LTD.) 25 January 2017 (2017-01-25) description, paragraphs 43-55 and 67-78, and figures 1-3 and 5 | 1-2, 7-10 |
| Y | CN 116091894 A (XIAOMI AUTOMOTIVE TECHNOLOGY CO., LTD.) 09 May 2023 (2023-05-09) description, specific embodiments, and figures 1-9 | 1-2, 7-10 |
| Y | CN 115384434 A (GUANGZHOU XIAOPENG MOTORS TECHNOLOGY CO., LTD.) 25 November 2022 (2022-11-25) description, specific embodiments, and figures 1-4 | 1-2, 7-10 |
| A | WO 2023092520 A1 (SZ DJI TECHNOLOGY CO., LTD.) 01 June 2023 (2023-06-01) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 September 2024** | **28 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/102091**

| Patent document cited in search report | | | Publication date (day/month/year) | Patent family member(s) | | | Publication date (day/month/year) |
|---|---|---|---|---|---|---|---|
| CN | 116811528 | A | 29 September 2023 | None | | | |
| CN | 106347374 | A | 25 January 2017 | WO | 2018058868 | A1 | 05 April 2018 |
| CN | 116091894 | A | 09 May 2023 | None | | | |
| CN | 115384434 | A | 25 November 2022 | None | | | |
| WO | 2023092520 | A1 | 01 June 2023 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310986496